# EUROPEAN PATENT SPECIFICATION

(11) **EP 0 553 506 B1**
(45) Date of publication and mention of the grant of the patent: **17.04.1996**
(21) Application number: 92202253.8
(22) Date of filing: 22.07.1992
(51) Int. Cl.: A01B 73/04, A01D 41/14

(54) **A foldable, improved, maize picking head**
Verbesserter klappbarer Maispflückvorsatz
Tête de récolte de mais pivotable perfectionnée

(30) Priority: 31.01.1992 IT TO920074
(43) Date of publication of application: 04.08.1993
(73) Proprietor: CAPELLO F.LLI RENATO E FRANCESCO S.N.C., I-12020 Fraz. Madonna dell'Olmo (Cuneo) (IT)
(72) Inventor: Capello, Elio, I-12100 Cuneo (IT); Capello, Alberto, I-12022 Busca (Cuneo) (IT)
(74) Representative: Robba, Eugenio

(56) References cited:
- EP-A- 0 232 555
- EP-A- 0 491 405
- DE-U- 8 535 733

## Description

The present invention refers to a foldable, improved, maize picking head.

It is well known how maize picking heads have nowadays reached considerable widths, so that it is necessary to make them foldable, to make their on-road transport easier, from warehouse to fields to be worked and vice versa, without meeting particular inconveniences as regards overall dimensions and handling.

The same Applicant of the present Patent Application has already submitted a previous Patent Application on the subject, aimed to facilitate movements of all mobile parts in said heads and to make their securing safer.

The above-mentioned Patent Application is the 68.0̸13-A/90̸ one dated December 18, 1990̸.

With the head designed in the traditional way, apart from the novelties included in the above-mentioned Patent Application, the side mobile parts of the head were motioned by two oleodynamic cylinders, horizontally placed on the upper central part of the head itself, and operating one on one side and the other on the other side of said mobile parts of the head. Such a machine showing the features of the preamble of claim 1 is known from DE-U-8535733.

A drawback in this system consists in the fact that, given the presence of oleodynamic cylinders, folding of said mobile parts in the fixed central part of the head does not occur in a complete way, coming to rest upon said oleodynamic cylinders, that, among other things, are not, by nature, the best support for two mobile elements of that kind.

Furthermore, the securing system for said mobile parts to the central part, in an open position, has been performed through a mechanical device that, after having carried out the opening, inserted a stopper pin into an adequate locking hole, integral with the mobile part of the head.

Purpose of the present invention is overcoming the above-said drawbacks regarding the uncomplete folding of the mobile parts of the head on its central part, providing, at the same time, a control system for lifting and lowering said mobile parts, in addition to operating the locking pin, that is undoubtedly more simple and rational.

The foldable, improved, maize picking head, object of the present invention, is characterized by the fact that, to actuate the mobile parts of the head, an oleodynamic cylinder with piston is provided, one on each side, placed next to the mobile part to be actuated, said piston having integral, next to its free end, a rack, parallel to the piston rod, engaged to a gear wheel integral with the mobile part to be actuated: the axial movement of said piston rod integral with said rack engaged to said gear wheel generating the latter one's rotation and consequently the actuation of the mobile part affected.

It is obvious that said oleodynamic cylinder is controlled by an oleodynamic unit placed in any point of the head, and connected to it through oleodynamic delivery and return pipes.

A further characteristic of the present invention is that, to operate the locking device of mobile parts of the head into their open position, another oleodynamic cylinder with piston is provided, one on each side, also placed next to the mobile part to be locked, the wedged free end of the rod composing the male element to be inserted into the slot provided in the mobile part to be locked, stopper rings being provided on said rod, suitable to beat against the cylinder edge, to stop and adjust the return stroke for the rod itself.

It is obvious that these oleodynamic cylinders too are controlled by the above-said oleodynamic unit, placed in any point of the head.

A further characteristic of the present invention is that the oleodynamic circuit is such as to allow the command sequence: at the end of stroke of a piston, the pressurized fluid will actuate the other piston till its end of stroke and vice versa, so that a single opening command will generate the time sequence of the two operations necessary to open and a single closing command will generate the time sequence of the two operations necessary to close the mobile parts with respect to the fixed one.

The present invention will now be described in detail with particular reference to the enclosed drawings, provided as a non-limiting example, in which:
- figure 1 is a perspective view of a maize picking head according to the invention;
- figure 2 is a front view of the head in figure 1 with its mobile parts lowered;
- figure 3 is a front view of the head in figure 1 with its mobile parts lifted and folded on the fixed part;
- figure 4 is a partial perspective view showing the oleodynamic cylinders controlling mobile parts of the head and locking device;
- figure 5 is a detailed perspective view of a mobile part at half stroke, being next to opening, showing the front end of the locking device.

As it appears evident from the figures, the foldable maize picking head, object of the present invention, is substantially composed like a normal head 1 with a fixed part 3 and two mobile parts 5, articulated aside of said fixed part 3.

Both fixed part 3 and mobile parts 5 are shaped as a frame, equipped on its upper side with cross members 7 and 9, respectively, running parallel to the base and substantially horizontal.

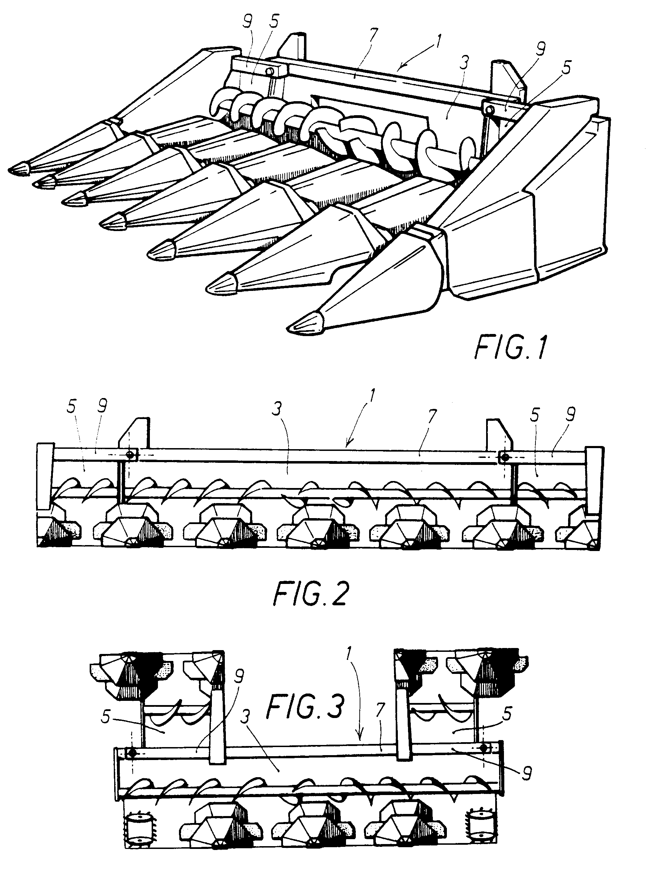

Figure 2 shows the head 1 with its mobile parts 5 open, while figure 3 shows said head 1 with its mobile part 5 folded.

To displace said mobile parts 5, the head 1 is provided equipped with an oleodynamic cylinder 11 with piston 13, one on each side, placed next to the mobile part 5 to be actuated.

Said piston 13 has integral, next to its free end 15, a rack 17, parallel to the piston rod 13, engaged to a gear wheel 19 integral with the mobile part 5 to be actuated.

The axial movement of said piston rod 13 integral with said rack 17 engaged to said gear wheel 19 generates the latter one's rotation and consequently the actuation of the mobile part 5 affected.

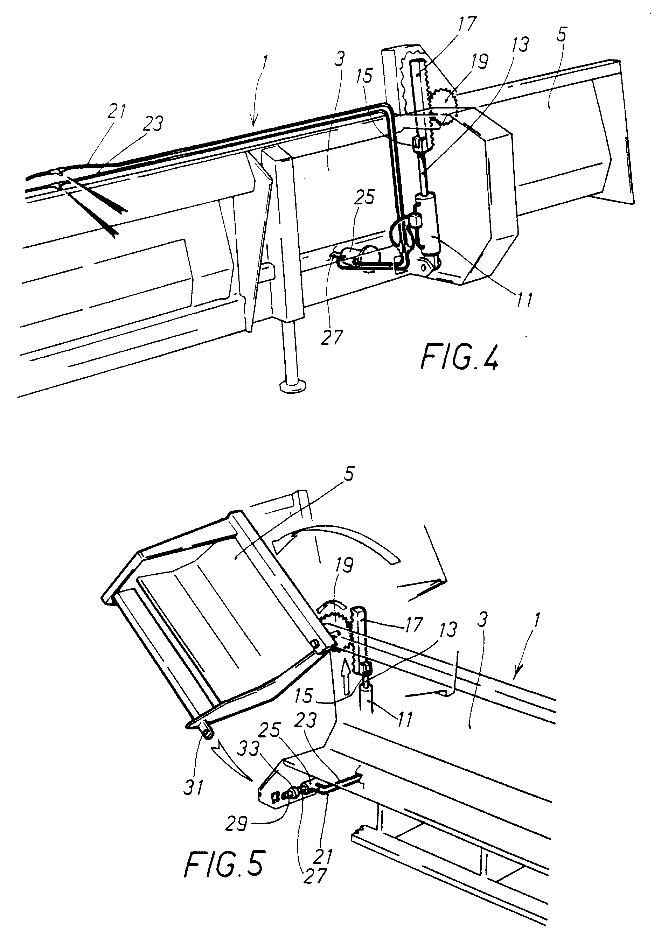

It is obvious that said oleodynamic cylinder 11 is controlled by an oleodynamic unit, not shown, placed in any point of the head 1, and connected to it through oleodynamic delivery pipes 21 and return pipes 23 (fig. 4 and 5).

To operate the locking device of mobile parts 5 of the head into their open position, another oleodynamic cylinder 25 with piston 27 is provided, one on each side, also placed next to the mobile part 5 to be locked, the wedged free end 29 of the rod 27 composing the male element to be inserted into the slot 31 provided in the mobile part 5 to be locked.

Stopper rings 33 are provided assembled on said rod 27, suitable to beat against the cylinder edge 25, to stop and adjust the return stroke for the rod 27 itself.

It is obvious that said oleodynamic cylinder 25 too is controlled by the above-mentioned oleodynamic unit (not shown), placed in any point of the head 1, and connected to it through oleodynamic delivery pipes 21 and return pipes 23.

It must be noted that the oleodynamic circuit is such as to allow the command sequence: during lifting of the mobile parts 5 with respect to the fixed part 3, the pressurized fluid will first actuate the piston 27 of the cylinder 25, opening the locking device, at end of stroke of said piston 27 the pressurized fluid will go on flowing into the lifting delivery duct 21 and will start operating on the piston 13 of the cylinder 11 connected to the rack 17 and the gear wheel 19.

During lowering of the mobile parts 5 with respect to the fixed part 3, the pressurized fluid will first actuate the piston 13 of the cylinder 11, lowering the mobile part 5, at end of stroke of said piston 13, the pressurized fluid will go on flowing into the lowering delivery duct 23 and will start operating on the piston 27 of the cylinder 25 generating the actuation of the locking device of the mobile part 5.

## Claims

1. Foldable, improved, maize picking head, comprising an oleodynamic cylinder (11) with piston (13) to actuate the mobile parts (5) of the head (1), characterized in that one oleodynamic cylinder (11) with piston (13) is provided on each side, placed next to the mobile part (5) to be actuated, said piston (13) having integral, next to its free end (15), a rack (17), parallel to the piston rod (13), engaged to a gear wheel (19) integral with the mobile part (5) to be actuated: the axial movement of said piston rod (13) integral with said rack (17) engaged to said gear wheel (19) generating the latter one's rotation and consequently the actuation of the mobile part (5) affected.

2. Foldable head as claimed in claim 1, characterized in that, to operate the locking device of mobile parts (5) of the head (1) into their open position, another oleodynamic cylinder (25) with piston (27) is provided, one on each side, also placed next to the mobile part (5) to be locked, the wedged free end (29) of the rod (27) composing the male element to be inserted into the slot (31) provided in the mobile part (5) to be locked, stopper rings (33) being provided on said rod (27), suitable to beat against the cylinder (25) edge, to stop and adjust the return stroke for the rod (27) itself.

3. Foldable head as claimed in claim 1 or 2, characterized in that the oleodynamic circuit is such as to allow the command sequence to the two oleodynamic cylinders: at the end of stroke of a piston, the pressurized fluid will actuate the other piston till its end of stroke and vice versa, so that a single opening command will generate the time sequence of the two operations necessary to open and a single closing command will generate the time sequence of the two operations necessary to close the mobile parts (5) with respect to the fixed one (3).

## Patentansprüche

1. Einklappbarer, verbesserter Maisernte-Kopf, umfassend einen öldynamischen Zylinder (11) mit Kolben (13) zur Betätigung der bewegbaren Teile (5) des Kopfes (1), dadurch gekennzeichnet, daß ein öldynamischer Zylinder (11) mit Kolben (13) auf jeder Seite vorgesehen und anschließend an den zu betätigenden, bewegbaren Teil (5) angeordnet ist, wobei der Kolben (13) an seinem freien Ende (15), parallel zur Kolbenstange (13), eine angegossene Zahnstange (17) aufweist, die in ein am zu betätigenden bewegbaren Teil (5) angegossenes Zahnrad (19) eingreift, wobei die axiale Bewegung der Kolbenstange (13) mit der angegossenen Zahnstange (17), die in das Zahnrad (19) eingreift, dessen Drehung und infolgedessen die Betätigung des bewegbaren Teils (5) bewirkt.

2. Einklappbarer Kopf nach Anspruch 1, dadurch gekennzeichnet, daß zur Betätigung der Verriegelungsvorrichtung der bewegbaren Teile (5) des Kopfes (1) in deren offener Stellung ein weiterer öldynamischer Zylinder (25) mit Kolben (27) vorgesehen ist, und zwar einer auf jeder Seite und ebenfalls anschließend an den zu verriegelnden, bewegbaren Teil (5) angeordnet, wobei das eingeklemmte freie Ende (29) der Kolbenstange (27) das männliche Element darstellt, das in den am zu verriegelnden, bewegbaren Teil (5) vorgesehenen Schlitz (31) einschiebbar ist und Anschlagringe (33) auf der Kolbenstange (27) angeordnet sind, die geeignet sind, daß die Kante des Zylinders (25) dagegen anstößt und den Kolben (27) stoppt und den Rückhub einstellt.

3. Einklappbarer Kopf nach Anspruch 1 oder 2, dadurch gekennzeichnet, daß der öldynamische Kreislauf die Befehlsfolge an die zwei öldynamschen Zylinder ermöglicht: am Ende eines Kolbenhubes betätigt die unter Druck stehende Flüssigkeit den anderen Kolben bis zu dessen Hubende und umgekehrt, so daß ein einziger Öffnungsbefehl den Ablauf der zwei Betätigungen erzeugt, die zum Öffnen notwendig sind und ein einziger Schließbefehl den Ablauf der zwei Betätigungen erzeugt, die zum Schließen der bewegbaren Teile (5) gegenüber dem festen Teil (3) notwendig sind.

## Revendications

1. Tête repliable perfectionnée pour la cueillette du maïs, comprenant un vérin oléodynamique (11) muni d'un piston (13) pour actionner les parties mobiles (5) de la tête (1), caractérisée en ce qu'un vérin oléodynamique (11), muni d'un piston (13) est prévu de chaque côté, à proximité immédiate de la partie mobile à actionner, ledit pistion (13) comportant, à proximité immédiate de son extrémité libre (15), une crémaillère (17) qui lui est solidaire, et qui est parallèle à la tige de piston (13) et engrenée sur une roue d'engrenage (19) solidaire de la partie mobile (5) à actionner: le déplacement axial de ladite tige de piston (13) solidaire de ladite crémaillère (17) engrenée sur ladite roue dentée (19), provoquant la rotation de cette dernière et, par conséquent, l'actionnement de la partie mobile concernée.

2. Tête repliable selon la revendication 1, caractérisée en ce que, pour amener le dispositif de verrouillage des parties mobiles (5) de la tête (1) en position ouverte, il est prévu de chaque côté et à proximité immédiate de la partie mobile à verrouiller, un autre vérin oléodynamique (25) muni d'un piston (27), l'extrémité libre en coin (29) de la tige (27) constituant l'élément mâle à insérer dans la fente (31) prévue dans la partie mobile (5) à verrouiller, des bagues d'arrêt (33) étant prévues sur ladite tige (27), et étant appropriées pour venir en appui contre le bord du cylindre (25), afin de limiter et de régler la course de retour de la tige (27) elle-même.

3. Tête repliable selon la revendication 1 ou 2, caractérisée en ce que le circuit oléodynamique est tel qu'il permette la commande en séquence des deux vérins oléodynamiques: à la fin de course d'un piston, le fluide sous pression actionne l'autre piston jusqu'à sa fin de course, et vice-versa, de façon qu'une commande d'ouverture unique provoque la séquence temporelle des deux opération nécessaires pour l'ouverture et qu'une commande de fermeture unique provoque la séquence temporelle des deux opérations nécessaires pour la fermeture des parties mobiles (5) par rapport à la partie fixe (3).
